# EUROPÄISCHE PATENTANMELDUNG

(11) **EP 3 620 081 A1**
(43) Veröffentlichungstag der Anmeldung: **11.03.2020**
(21) Anmeldenummer: 19188771.0
(22) Anmeldetag: 29.07.2019
(51) Int. Cl.: A47B 88/493

(54) **TELESKOPSCHIENE**

(30) Priorität: 03.08.2018 DE 102018118973
(71) Anmelder: Liebherr-Verzahntechnik GmbH, 87437 Kempten (DE)
(72) Erfinder: Mattern, Thomas, 87669 Rieden (DE); Zollitsch, Markus, 87490 Haldenwang (DE); Hößle, Florian, 87509 Immenstadt (DE)
(74) Vertreter: Behr, Wolfgang

(57) **Zusammenfassung**

Die vorliegende Erfindung zeigt eine Teleskopschiene mit mindestens einem inneren, mittleren und äußeren Schienenelement, wobei das innere und das äußere Schienenelement jeweils über Wälzkörper, welche in einem Wälzkörperkäfig geführt sind, längsverschieblich an dem mittleren Schienenelement gelagert sind. Gemäß einem ersten Aspekt ist vorgesehen, dass die Schienenelemente über eine Schienen-Synchronisierungsanordnung mechanisch so zwangsgekoppelt sind, dass bei einer Längsverschiebung des äußeren Schienenelementes gegenüber dem inneren Schienenelement das mittlere Schienenelement sowohl gegenüber dem inneren als auch dem äußeren Schienenelement längsverschoben wird. Gemäß einem zweiten Aspekt ist vorgesehen, dass mindestens einer und bevorzugt beide Wälzkörperkäfige jeweils über eine Wälzkörperkäfig-Synchronisierungsanordnung mechanisch so mit mindestens einem der Schienenelemente zwangsgekoppelt sind, dass eine Längsverschiebung des mittleren Schienenelementes gegenüber dem inneren oder äußeren Schienenelement zu einer Längsverschiebung des entsprechenden Wälzkörperkäfigs gegenüber dem mittleren Schienenelement führt.

## Beschreibung

Die vorliegende Erfindung betrifft eine Teleskopschiene mit mindestens einem inneren, mittleren und äußeren Schienenelement, wobei das innere und das äußere Schienenelement jeweils über Wälzkörper, welche in einem Wälzkörperkäfig geführt sind, längsverschieblich an dem mittleren Schienenelement gelagert sind.

Insbesondere handelt es sich um eine Teleskopschiene für ein Werkstück-Handling-System, bei welchem ein Handling-Element für Werkstücke, insbesondere ein Greifer, eine Gabel und/oder Ablageplatte, über mindestens zwei Teleskopschienen an einem Basiselement angeordnet ist. Ein solches Werkstück-Handling-System ist aus der DE 10 2016 009 000 A1 bekannt.

Der Antrieb einer solchen Teleskopschiene kann beispielsweise über einen Linearantrieb, bspw. in Form eines umlaufenden Bandes erfolgen, welcher an dem äußeren Schienenelement angreift. Bei einem Ausziehen des äußeren Schienenelements erfolgt die Mitnahme des mittleren Schienenelementes und der Wälzkörperkäfige jedoch unkontrolliert, was zu einem erhöhten Verschleiß und einem Verklemmen führen kann.

Aus der DE 100 40 492 A1 ist es daher bekannt, sämtliche Schienenelemente mit einer Zahnstange zu versehen, an welcher jeweils ein durch eine Antriebseinheit bewegtes Ritzel angreift. Hierdurch soll ein kontrolliertes, sukzessives Ausfahren der Schienenelemente erreicht werden. Allerdings erfordert diese Lösung einen erheblichen konstruktiven Aufwand und löst die vorhandenen Probleme allenfalls teilweise.

Im Bereich der Linearführungen sind aus den Druckschriften EP 1 236 912 A2, DE 198 15 525 A1, DE 1 192 462, EP 2 397 712 A1 und DE 10 2016 210 751 A1 jeweils Zwangsführungen für einen Wälzkörperkäfig bekannt.

Aufgabe der vorliegenden Erfindung ist es, eine verbesserte Teleskopschiene zur Verfügung zu stellen.

Diese Aufgabe wird durch eine Teleskopschiene gemäß Anspruch 1 gelöst. Bevorzugte Ausgestaltungen der vorliegenden Erfindung sind Gegenstand der Unteransprüche.

In einem ersten Aspekt umfasst die vorliegende Erfindung eine Teleskopschiene mit mindestens einem inneren, mittleren und äußeren Schienenelement, wobei das innere und das äußere Schienenelement jeweils über Wälzkörper, welche in einem Wälzkörperkäfig geführt sind, längsverschieblich an dem mittleren Schienenelement gelagert sind. Der erste Aspekt ist dadurch gekennzeichnet, dass die Schienenelemente über eine Schienen-Synchronisierungsanordnung mechanisch so zwangsgekoppelt sind, dass bei einer Längsverschiebung des äußeren Schienenelementes gegenüber dem inneren Schienenelement das mittlere Schienenelement sowohl gegenüber dem inneren als auch dem äußeren Schienenelement längsverschoben wird. Hierdurch wird kein separater Antrieb der einzelnen Schienenelemente benötigt, und dennoch ein kontrolliertes Ausfahren der Schienenelemente ermöglicht.

In einem zweiten Aspekt umfasst die vorliegende Erfindung eine Teleskopschiene mit mindestens einem inneren, mittleren und äußeren Schienenelement, wobei das innere und das äußere Schienenelement jeweils über Wälzkörper, welche in einem Wälzkörperkäfig geführt sind, längsverschieblich an dem mittleren Schienenelement gelagert sind. Der zweite Aspekt ist dadurch gekennzeichnet, dass mindestens einer und bevorzugt beide Wälzkörperkäfige jeweils über eine Wälzkörperkäfig-Synchronisierungsanordnung mechanisch so mit mindestens einem der Schienenelemente zwangsgekoppelt sind, dass eine Längsverschiebung des mittleren Schienenelementes gegenüber dem inneren oder äußeren Schienenelement zu einer Längsverschiebung des entsprechenden Wälzkörperkäfigs gegenüber dem mittleren Schienenelement führt. Hierdurch wird ein unkontrolliertes Wandern der Wälzkörperkäfige und ein hiermit einhergehendes Verklemmen der Teleskopschiene verhindert.

Der erste und der zweite Aspekt der vorliegenden Erfindung können unabhängig voneinander eingesetzt werden und bilden unabhängig voneinander jeweils separate Gegenstände der Erfindung.

Bevorzugt kommen der erste und der zweite Aspekt der vorliegenden Erfindung jedoch in Kombination zum Einsatz. Durch diese Kombination aus einer synchronisierten Bewegung der Schienenelemente und einer hierzu nochmals synchronisierten Bewegung der Wälzkörperkäfige ergibt sich ein besonders verschleißarmer und störungsfreier Betrieb der Teleskopschiene.

Wird im Rahmen der vorliegenden Erfindung von einem inneren und einem äußeren Schienenelement gesprochen, so hat dies einen rein illustrativen Charakter und schränkt weder die Ausgestaltung noch die Anordnung des inneren und äußeren Schienenelements ein, sondern ist gleichbedeutend mit einem ersten und einem zweiten Schienenelement.

Bevorzugt stellt das innere Schienenelement jedoch in der Eibausituation das statische Element dar, über welches die Teleskopschiene an einem Basiselement befestigt wird, und das äußere Schienenelement das verschiebliche Element, an welchem eine Last angebracht wird, welche bewegt werden soll.

In einer möglichen Ausgestaltung der vorliegenden Erfindung ist vorgesehen, dass die Wälzkörperkäfig-Synchronisierungsanordnung so ausgelegt ist, dass die Längsverschiebung des Wälzkörperkäfigs gegenüber dem mittleren Schienenelement der halben Längsverschiebung des entsprechenden Schienenelementes gegenüber dem mittleren Schienenelement entspricht. Hierdurch bleibt der Wälzkörperkäfig in der Mitte des Überlappungsbereichs der zugehörigen Schienenelemente.

In einer möglichen Ausgestaltung der vorliegenden Erfindung ist vorgesehen, dass die Schienen-Synchronisierungsanordnung so ausgelegt ist, dass die Längsverschiebung des inneren Schienenelementes gegenüber dem mittleren Schienenelement der Längsverschiebung des mittleren Schienenelementes gegenüber dem äußeren Schienenelement entspricht. Hierdurch ergibt sich eine synchrone Bewegung, durch welche das mittlere und das äußere Schienenelement gleichzeitig ihre Endstellungen erreichen.

In einer möglichen Ausgestaltung der vorliegenden Erfindung ist vorgesehen, dass die Schienen-Synchronisierungsanordnung ein Ritzel umfasst, welches am mittleren Schienenelement gelagert ist und mit Zahnstangen, welche am inneren und am äußeren Schienenelement vorgesehen sind, kämmt.

Bevorzugt ist das Ritzel auf einer Ober- oder Unterseite des mittleren Schienenelementes gelagert. Die Zahnstangen sind bevorzugt so an dem inneren und äußeren Schienenelement befestigt, dass diese die Oberseite des mittleren Schienenelementes überragen. Die Drehachse des Ritzels ist bevorzugt vertikal ausgerichtet. Die Zahnstangen sind bevorzugt als separate Elemente an dem inneren und äußeren Schienenelement befestigt, insbesondere jeweils über eine seitlich an dem inneren bzw. äußeren Schienenelement befestigte Montageplatte..

In einer möglichen Ausgestaltung der vorliegenden Erfindung ist vorgesehen, dass die Schienen-Synchronisierungsanordnung mindestens ein Zugelement, insbesondere ein Seil oder Band, umfasst, dessen Enden an dem inneren und dem äußeren Schienenelement befestigt sind und welches über ein am mittleren Schienenelement vorgesehenen Umlenkelement umgelenkt wird, wobei bevorzugt zwei Zugelemente vorgesehen sind, welche in entgegengesetzte Richtungen wirken.

In einer möglichen Ausgestaltung der vorliegenden Erfindung ist vorgesehen, dass mindestens eine und bevorzugt beide Wälzkörperkäfig-Synchronisierungsanordnungen ein Ritzel umfassen, welches an dem Wälzkörperkäfig gelagert ist und mit Zahnstangen kämmt, welche an den dem jeweiligen Wälzkörperkäfig zugeordneten Schienenelementen vorgesehen sind.

Die Drehachse des Ritzels verläuft bevorzugt in einer Ebene, welche senkrecht auf der Längsachse der Teleskopschiene steht.

Das Ritzel kann bspw. eine vertikale Drehachse aufweisen. In diesem Fall kämmt es bevorzugt mit einander gegenüberliegenden Bereichen seines Umfangs die an den jeweiligen Schienenelementen angeordneten Zahnstangen.

Das Ritzel kann bspw. auch eine horizontale Drehachse aufweisen. In diesem Fall ist es bevorzugt zweigeteilt.

In einer möglichen Ausgestaltung sind die Zahnstangen in das Material des jeweiligen Schienenelementes eingebracht sind, bspw. durch Fräsen. Insbesondere bei einer vertikalen Drehachse kann hierdurch Bauraum gespart werden.

In einer möglichen Ausgestaltung sind die Zahnstangen als separates Element mit dem jeweiligen Schienenelement verbunden.

In einer möglichen Ausgestaltung der vorliegenden Erfindung ist vorgesehen, dass das innere und/oder das äußere Schienenelement zwei parallele, bevorzugt in vertikaler Richtung übereinander angeordnete und/oder in entgegengesetzte Richtung ausgerichtete Führungsbahnen aufweist, welche entsprechenden Führungsbahnen des mittleren Schienenelements zugeordnet sind und auf welchen die Wälzkörper abwälzen, wobei die Wälzkörperkäfige für die den beiden Führungsbahnen zugeordneten Wälzkörper über einen Verbindungsbereich miteinander verbunden sind. Hierdurch ergibt sich eine besonders gute Belastbarkeit der Teleskopschiene.

In einer bevorzugten Ausgestaltung sind die Wälzkörperkäfige für die den beiden Führungsbahnen zugeordneten Wälzkörper und der Verbindungsbereich einstückig ausgeführt, beispielsweise als gebogener Blechabschnitt.

In einer weiteren bevorzugten Ausgestaltung erstreckt sich der Verbindungsbereich zwischen einander zugewandten Seitenflächen des mittleren und des inneren bzw. äußeren Schienenelements. Die Wälzkörperkäfige können das innere bzw. äußere Schienenelement umgreifen.

In einer möglichen Ausgestaltung der vorliegenden Erfindung ist vorgesehen, dass die Wälzkörperkäfig-Synchronisierungsanordnung an dem Verbindungsbereich angeordnet ist und/oder angreift. Hierdurch wird eine im Hinblick auf die Kräfteverteilung und den Bauraum vorteilhafte Ausgestaltung gewährleistet.

In einer möglichen Ausgestaltung der vorliegenden Erfindung ist ein Ritzel der Wälzkörperkäfig-Synchronisierungsanordnung am Verbindungsbereich gelagert.

In einer möglichen Ausgestaltung der vorliegenden Erfindung weist das mittlere und/oder das innere bzw. äußere Schienenelement eine nutförmige Aussparung auf, in welcher eines oder mehrere Elemente der Wälzkörperkäfig-Synchronisierungsanordnung vorgesehen sind. Die nutförmige Aussparung stellt den notwendigen Bauraum für die am Verbindungsbereich angeordnete Wälzkörperkäfig-Synchronisierungsanordnung zur Verfügung.

In einer möglichen Ausgestaltung der vorliegenden Erfindung ist vorgesehen, dass sowohl der obere als auch der untere Wälzkörperkäfig, welche durch die Verbindungsanordnung verbundenen sind, einen Mitnehmerabschnitt aufweisen, an welchem die Wälzkörperkäfig-Synchronisierungsanordnung angeordnet ist und/oder angreift. Der Mitnehmerabschnitt ist bevorzugt jeweils auf der dem Verbindungsbereich abgewandten Seite des jeweiligen Wälzkörperkäfigs vorgesehen und kann insbesondere aus dem Bereich zwischen den Schienenelementen nach außen geführt sein. Auch hierdurch wird eine im Hinblick auf die Kräfteverteilung und den Bauraum vorteilhafte Ausgestaltung gewährleistet.

In einer möglichen Ausgestaltung der vorliegenden Erfindung ist vorgesehen, dass die Wälzkörperkäfig-Synchronisierungsanordnungen lediglich über die jeweiligen Schienenelemente mit der Schienen-Synchronisierungsanordnung zwangsgekoppelt sind.

In einer möglichen alternativen Ausgestaltung der vorliegenden Erfindung ist vorgesehen, dass die Wälzkörperkäfig-Synchronisierungsanordnungen über eine Kopplungsanordnung mit der Schienen-Synchronisierungsanordnung zwangsgekoppelt sind.

In einer möglichen alternativen Ausgestaltung der vorliegenden Erfindung ist vorgesehen, dass die Wälzkörperkäfige über mindestens ein Zugelement, insbesondere einen Riemen, von der Schienen-Synchronisierungsanordnung angetrieben werden, wobei das Zugelement bevorzugt die Wälzkörperkäfige miteinander koppelt und/oder um ein Antriebselement umläuft, welches von einem Ritzel der Schienen-Synchronisierungsanordnung angetrieben wird und/oder am mittleren Schienenelement gelagert ist.

In einer möglichen Ausgestaltung der vorliegenden Erfindung ist vorgesehen, dass die Wälzkörperkäfig-Synchronisierungsanordnung mindestens ein Zugelement, insbesondere ein Seil oder Band, umfasst, über welches der Wälzkörperkäfig mit dem mittleren und dem inneren oder äußeren Schienenelement in Verbindung steht, wobei das Zugelement bevorzugt in Form eines Flaschenzuges um ein Umlenkelement geführt ist, welches mit dem Wälzkörperkäfig in Verbindung steht. Ein weiteres Umlenkelement ist bevorzugt am mittleren und/oder inneren bzw. äußeren Schienenelement vorgesehen.

In einer möglichen alternativen Ausgestaltung der vorliegenden Erfindung sind für Bewegungen in beide Richtungen separate Zugelemente, welche bevorzugt jeweils in Form eines Flaschenzuges um ein Umlenkelement geführt sind, vorgesehen.

In einer möglichen Ausgestaltung der vorliegenden Erfindung weist die Teleskopschiene einen Antrieb auf, welcher an dem inneren oder äußeren Schienenelement angreift, um die Schienenelemente gegeneinander zu verschieben, wobei der Antrieb bevorzugt über einen umlaufenden Riemen erfolgt, welcher über einen Mitnehmer mit dem inneren oder äußeren Schienenelement gekoppelt ist.

In einer möglichen Ausgestaltung der vorliegenden Erfindung ist vorgesehen, dass das äußere Schienenelement um maximal seine eigene Länge gegenüber dem inneren Schienenelement längsverschieblich ist.

In einer möglichen Ausgestaltung der vorliegenden Erfindung ist vorgesehen, dass das mittlere Schienenelement das innere und/oder äußere Schienenelement auf der Unter- und Oberseite umgreift, wobei das innere und/oder äußere Schienenelement bevorzugt auf der Unter- und der Oberseite Führungsbahnen aufweist, auf welcher die Wälzkörper abwälzen.

Die vorliegende Erfindung umfasst weiterhin ein Werkstück-Handling-System mit mindestens einer Teleskopschiene, wie sie oben beschrieben wurde.

Bevorzugt ist hierbei ein Handling-Element für Werkstücke, insbesondere ein Greifer, eine Gabel und/oder Ablageplatte, über mindestens zwei Teleskopschienen an einem Basiselement angeordnet, wobei das Basiselement bevorzugt eine oder mehrere Bewegungsachsen aufweist.

In einer möglichen Ausgestaltung der vorliegenden Erfindung ist vorgesehen, dass es sich um ein Regalbediengerät für ein Palettenspeichersystem handelt, wobei das Handling-Element bevorzugt zum Einbringen und/oder Entnehmen von Werkstücken und/oder Paletten in Speicherfächer dient.

Insbesondere kann das Regalbediengerät und das Palettenspeichersystem so ausgestaltet sein, wie dies aus der DE 10 2016 009 000 A1 bekannt ist. Der Inhalt der DE 10 2016 009 000 A1 wird daher vollumfänglich zum Gegenstand der vorliegenden Erfindung gemacht.

Die vorliegende Erfindung wird nun anhand von Zeichnungen und Ausführungsbeispielen näher erläutert.

Dabei zeigen:
- Fig. 1: ein erstes Ausführungsbeispiel einer erfindungsgemäßen Teleskopschiene, bei welchem beide Aspekte der vorliegenden Erfindung verwirklicht sind,
- Fig. 2: eine Detailansicht des ersten Ausführungsbeispiels einer erfindungsgemäßen Teleskopschiene,
- Fig. 3: eine Schnittansicht senkrecht zur Längsachse des ersten Ausführungsbeispiels einer erfindungsgemäßen Teleskopschiene,
- Fig. 4: eine weitere Schnittansicht senkrecht zur Längsachse von Teilen des ersten Ausführungsbeispiels einer erfindungsgemäßen Teleskopschiene,
- Fig. 5: eine Schnittansicht in einer horizontalen Ebene entlang der Längsachse des ersten Ausführungsbeispiels einer erfindungsgemäßen Teleskopschiene im Bereich der Wälzkörperkäfig-Synchronisierungsanordnung,
- Fig. 6: eine Schnittansicht senkrecht zur Längsachse eines zweiten Ausführungsbeispiels einer erfindungsgemäßen Teleskopschiene im Bereich der Wälzkörperkäfig-Synchronisierungsanordnung,
- Fig. 7: eine perspektivische Detaildarstellung der Zahnstangen der Wälzkörperkäfig-Synchronisierungsanordnung bei einem dritten Ausführungsbeispiels einer erfindungsgemäßen Teleskopschiene,
- Fig. 8: eine Schnittansicht senkrecht zur Längsachse von Teilen des dritten Ausführungsbeispiels einer erfindungsgemäßen Teleskopschiene im Bereich der Wälzkörperkäfig-Synchronisierungsanordnung,
- Fig. 9: eine perspektivische Darstellung eines vierten Ausführungsbeispiels einer erfindungsgemäßen Teleskopschiene,
- Fig. 10: eine Seitenansicht eines fünften Ausführungsbeispiels einer erfindungsgemäßen Teleskopschiene,
- Fig. 11: eine perspektivische Darstellung des fünften Ausführungsbeispiels einer erfindungsgemäßen Teleskopschiene,
- Fig. 12: eine Schnittansicht des fünften Ausführungsbeispiels einer erfindungsgemäßen Teleskopschiene im Bereich der Kopplung zwischen der Wälzkörperkäfig-Synchronisierungsanordnung und der Schienen-Synchronisierungsanordnung,
- Fig. 13: ein Ausführungsbeispiels eines Regalbediengeräts gemäß der vorliegenden Erfindung und
- Fig. 14: ein Ausführungsbeispiels eines Palettenspeichersystems mit einem erfindungsgemäßen Regalbediengerät.

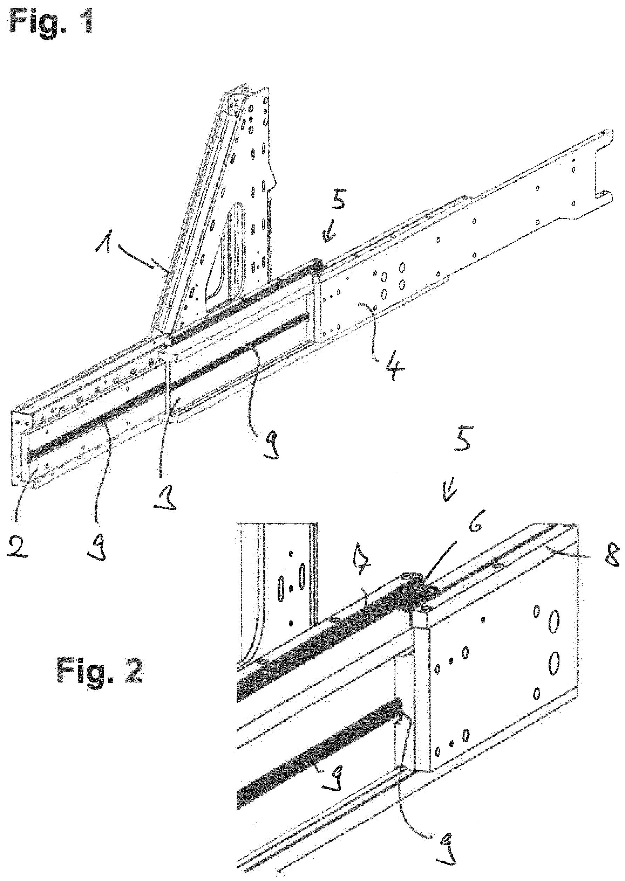

In Fig. 1 bis 5 ist ein erstes Ausführungsbeispiel einer Teleskopschiene gemäß der vorliegenden Erfindung gezeigt. Der anhand dieses Ausführungsbeispiels erläutere Grundaufbau der Teleskopschiene kommt jedoch auch bei den übrigen Ausführungsbeispielen zum Einsatz.

Die Teleskopschiene weist ein inneres Schienenelement 2, ein mittleres Schienenelement 3 und ein äußeres Schienenelement 4 auf. Mit dem inneren Schienenelement ist die Teleskopschiene an einem Basiselement festlegbar, beispielsweise über den Montagewinkel 1.

An dem äußeren Schienenelement greift ein nicht dargestellter Linearantrieb an, über welchen das äußere Schienenelement gegenüber dem Basiselement und damit gegenüber dem inneren Schienenelement längsverschieblich ist.

Es handelt sich bei dem Linearantrieb beispielsweise um einen parallel zum äußeren Schienenelement verlaufenden, um zwei Umlenkrollen umlaufenden Riemen, wobei mindestens eine der beiden Umlenkrollen motorisch angetrieben ist. Der Riemen steht dabei mit dem äußeren Schienenelement über einen Mitnehmer in Verbindung und bewegt dieses. Alternativ wäre aber auch ein Antrieb bspw. über ein Hydraulik- oder Pneumatikzylinder denkbar.

Alle drei Schienenelemente weisen eine balkenförmige Grundform auf, wobei die Schienenelemente zumindest in einem mittleren Bereich nebeneinander angeordnet sind. Die Höhe der Schienenelemente ist bevorzugt größer als deren Dicke in dem Bereich, in welchem alle drei Schienenelemente nebeneinander angeordnet sind, bevorzugt mindestens dreimal so hoch wie die Dicke.

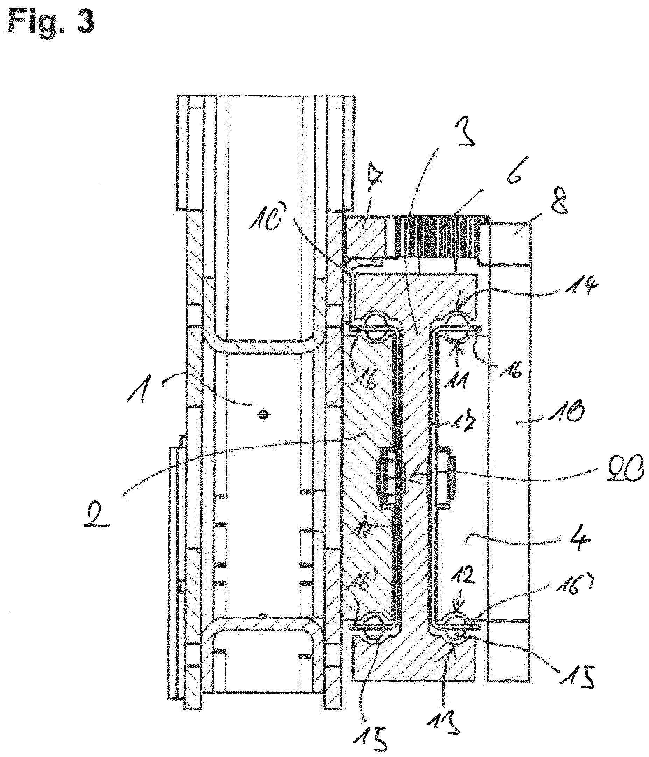

Wie insbesondere aus Fig. 3 ersichtlich, sind das innere Schienenelement 2 und das äußere Schienenelement 4 jeweils längsverschieblich an dem mittleren Schienenelement 3 gelagert. Die Lagerung erfolgt jeweils über Wälzkörper 15, welche in Wälzkörperkäfigen 16 und 16' geführt sind. Bei den Wälzkörpern handelt es sich insbesondere um Kugeln.

Im Ausführungsbeispiel weisen sowohl das innere Schienenelement 2 als auch das äußere Schienenelement 4 jeweils zwei Führungsbahnen 11 und 12 auf, welche mit Führungsbahnen 14 und 13 an dem mittleren Schienenelement 3 jeweils eine Führungsbahn für die Wälzkörper 15 bilden.

Im Ausführungsbeispiel sind die Führungsbahnen 11 und 12 auf der Oberseite und Unterseite des inneren Schienenelements 2 bzw. des äußeren Schienenelements 4 vorgesehen. Das mittlere Schienenelement 3 umgreift das innere Schienenelement 2 und das äußere Schienenelement 4 jeweils auf deren Oberseite und Unterseite und weist dort die den Führungsbahnen 11 und 12 zugeordneten Führungsbahnen 14 und 13 auf.

Die den oberen und unteren Führungsbahnen zugeordneten Wälzkörper sind jeweils in Wälzkörperkäfigen 16 und 16' angeordnet, wobei die Wälzkörperkäfige im Ausführungsbeispiel durch einen Verbindungsbereich 17 miteinander verbunden sind. Beispielsweise sind die Wälzkörperkäfige 16 und 16' mit dem Verbindungsbereich 17 einstückig aus einem gebogenen Blechstück geformt, wobei die Wälzkörper in Aussparungen des Blechstücks angeordnet sind.

Der Verbindungsbereich erstreckt sich daher von dem oberen Wälzkörperkäfig 16 zwischen den einander gegenüberliegenden Seitenflächen der mittleren Schienenelementes und des inneren bzw. äußeren Schienenelementes hindurch zum unteren Wälzkörperkäfig 16'

Gemäß dem ersten Aspekt der vorliegenden Erfindung sind die Schienenelemente 2, 3 und 4 über eine Schienen-Synchronisierungsanordnung 5 mechanisch so zwangsgekoppelt, dass bei einer Längsverschiebung des äußeren Schienenelementes 4 gegenüber dem inneren Schienenelement 2 das mittlere Schienenelement 3 sowohl gegenüber dem inneren als auch dem äußeren Schienenelement 2, 4 längsverschoben wird.

Bei dem in Fig. 1 bis 5 gezeigten ersten Ausführungsbeispiel wird dies dadurch erreicht, dass am mittleren Schienenelement 3 ein Ritzel 6 gelagert ist, welches mit Zahnstangen 7 und 8 kämmt, welche am inneren und am äußeren Schienenelement 2, 4 vorgesehen sind. Im Ausführungsbeispiel ist das Ritzel 6 auf der Oberseite des mittleren Schienenelements 3 angeordnet. Die Zahnstangen 7 und 8 sind über Montageplatten bzw. -winkel 10', 10 so an dem inneren und am äußeren Schienenelement 2, 4 angeordnet, dass sie die Oberseite des mittleren Schienenelements 3 überragen. Das Ritzel 6 und die Zahnstangen 7 und 8 könnten in gleicher Weise auch an der Unterseite der Teleskopschiene angeordnet werden.

Gemäß dem zweiten Aspekt der vorliegenden Erfindung sind die Wälzkörperkäfige 16, 16' für die zwischen dem mittleren Schienenelement 3 und dem inneren Schienenelement 2 sowie zwischen dem mittleren Schienenelement 3 und dem äußeren Schienenelement 4 vorgesehenen Wälzkörper 15 jeweils über eine Wälzkörperkäfig-Synchronisierungsanordnung 20 mechanisch so mit mindestens einem der Schienenelemente 2, 3, 4 zwangsgekoppelt, dass eine Längsverschiebung des mittleren Schienenelementes 3 gegenüber dem inneren oder äußeren Schienenelement 2, 4 zu einer Längsverschiebung des entsprechenden Wälzkörperkäfigs 16, 16' gegenüber dem mittleren Schienenelement 3 führt.

Bei dem in Fig. 1 bis 5 gezeigten ersten Ausführungsbeispiel wird dies dadurch erreicht, dass an den Wälzkörperkäfigen 16, 16' ein Ritzel 19 gelagert ist, welches mit Zahnstangen 9 kämmt, welche am mittleren Schienenelement 3 und dem inneren und äußeren Schienenelement 2, 4 vorgesehen sind.

Im Ausführungsbeispiel ist die Wälzkörperkäfig-Synchronisierungsanordnung 20 im Bereich des Verbindungselementes 17 des oberen und des unteren Wälzkörperkäfigs 16, 16' vorgesehen. Insbesondere ist das das Ritzel 19 an dem Verbindungsbereich 17 gelagert. Die Zahnstangen sind an den einander über den Verbindungsbereich 17 gegenüberliegenden Seitenflächen des mittleren Schienenelementes und des inneren bzw. äußeren Schienenelementes vorgesehen.

Das innere und das äußere Schienenelement weisen im Bereich der Wälzkörperkäfig-Synchronisierungsanordnung 20 eine zum mittleren Schienenelement zugewandte Nut auf, um ausreichend Platz für das Ritzel und die Zahnstangen zu erhalten.

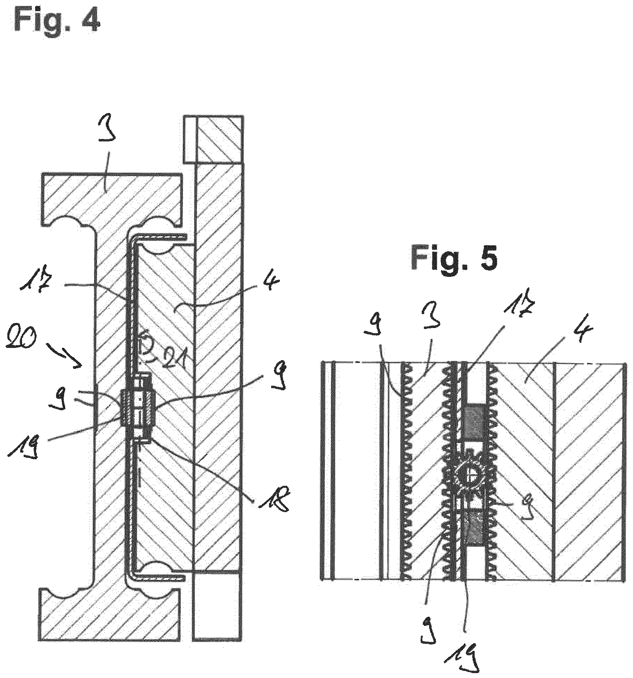

Bei dem in Fig. 1 bis 5 gezeigten ersten Ausführungsbeispiel verläuft die Drehachse 21 in vertikaler Richtung, so dass das Ritzel 19 mit einander gegenüberliegenden Umfangsbereichen mit den beiden Zahnstangen 9 kämmt, siehe die Schnittansicht entlang einer horizontalen Ebene in Fig. 5. Um Bauraum zu sparen, können die Zahnstangen 9 unmittelbar in das Material der Schienenelemente eingebracht sein, beispielsweise durch Fräsen. Alternativ könnten diese jedoch auch als separates Zahnbänder an den Schienenelementen angeordnet bzw. in Nuten eingesetzt sein.

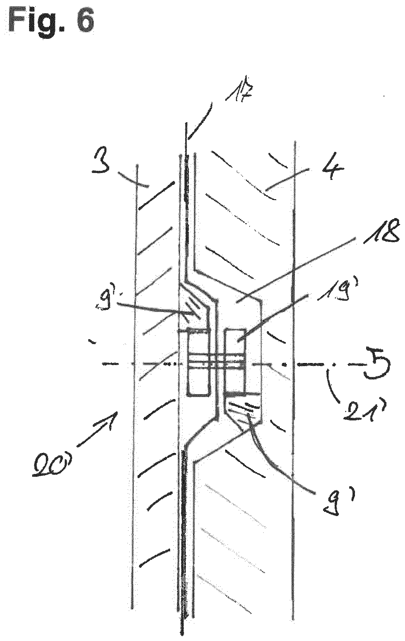

Das in Fig. 6 gezeigte alternative Ausführungsbeispiel unterscheidet sich von dem in Fig. 1 bis 5 gezeigten Ausführungsbeispiel nur im Hinblick auf die Anordnung des Ritzels 19' und der Zahnstangen 9'. Hier verläuft die Drehachse 21' des Ritzels 19' horizontal. Das Ritzel 19' ist dabei in zwei Zahnräder aufgespalten, welche beiderseits des Verbindungsbereichs 17 angeordnet sind: Im Ausführungsbeispiel sind die beiden Zahnräder auf einer gemeinsamen Welle angeordnet sind, welche durch eine Lagerung im Verbindungsbereich 17 hindurch geht. Jedes der beiden Zahnräder kämmt mit einer Zahnstange 9' am mittleren Schienenelement 7 und am inneren bzw. äußeren Schienenelement 3, 4, wobei die Zahnstangen auf gegenüberliegenden Seiten am Umfang der Zahnräder angreifen, d.h. einmal von oben und einmal von unten.

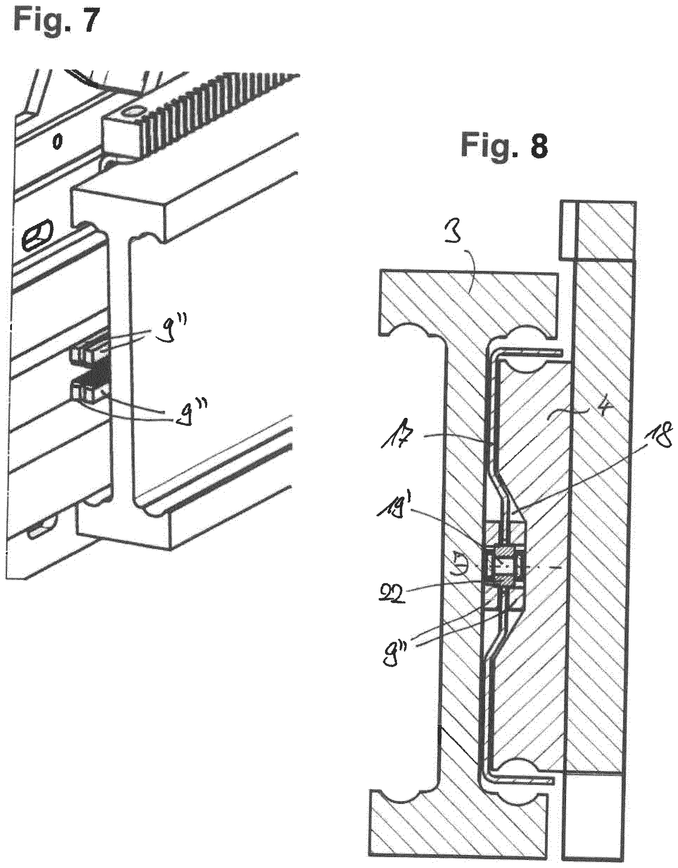

Das in Fig. 7 und 8 gezeigte weitere alternative Ausführungsbeispiel entspricht der in Fig. 6 gezeigten Konstruktion, weist jedoch paarweise angeordnete Zahnstangen 9' auf, so dass jedes der beiden Zahnräder, in welches das Ritzel 19' aufgeteilt ist, sowohl auf seiner Oberseite als auch auf seiner Unterseite mit einer Zahnstange kämmt. Die beiden unteren Ritzel stehen dabei mit dem einen Schienenelement in Verbindung, die beiden oberen mit dem jeweils anderen Schienenelement.

Bei den bisher beschriebenen Ausführungsbeispielen können entlang der Längserstreckung der Wälzkörperkäfige bzw. des Verbindungsbereichs mehrere Ritzel vorgesehen sein, welche mit den Zahnstangen kämmen. Bspw. können im vorderen und im hinteren Endbereich des Verbindungsbereich jeweils ein Ritzel vorgesehen sein.

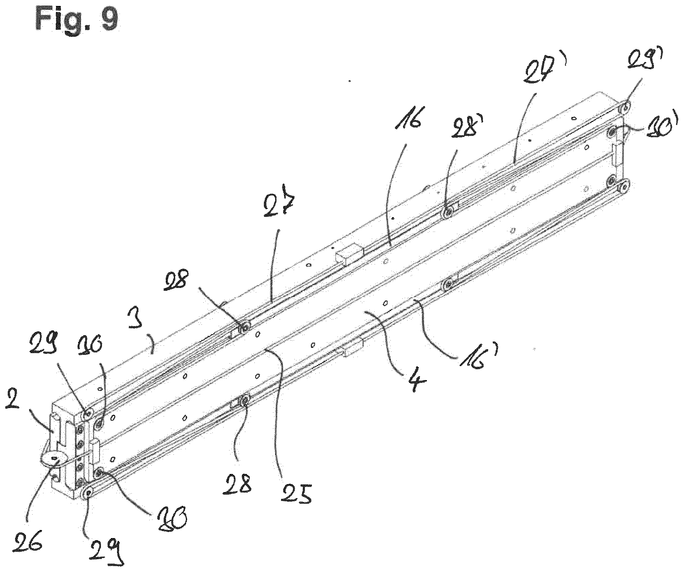

Fig. 9 zeigt nun ein Ausführungsbeispiel einer erfindungsgemäßen Teleskopschiene, welche zwar dem Grundaufbau der in Fig. 1 bis 5 gezeigten Konstruktion entspricht, für die Umsetzung der Schienen-Synchronisierungsanordnung und der Wälzkörperkäfig-Synchronisierungsanordnungen jedoch eine andere konstruktive Ausgestaltung wählt.

Die Schienen-Synchronisierungsanordnung umfasst dabei ein Seil 25, welches von einem vorderen Endbereich des äußeren Schienenelementes 4, an welchem es befestigt ist, entlang der Längserstreckung der Teleskopschiene zu einer Umlenkrolle 26 verläuft, welche an einem hinteren Endbereich des mittleren Schienenelementes angeordnet ist. Von dort aus verläuft das Seil 25 wieder entlang der Längserstreckung der Teleskopschiene einem vorderen Endbereich des inneren Schienenelementes 2. Das Seil verläuft dabei bevorzugt zwischen den dem mittleren Schienenelement 3 zugewandten Seitenflächen des inneren und/oder äußeren Schienenelementes 2, 4 und dem mittleren Schienenelement 3. Durch eine Verfahrbewegung des äußeren Schienenelementes 4 nach vorne (in der Zeichnung nach rechts) wird daher das mittlere Schienenelement 3 gegenüber dem inneren Schienenelement 2 ebenfalls nach vorne verfahren. Um eine Synchronisation auch für die Einfahrbewegung zu erreichen, ist bevorzugt zusätzlich noch eine in der umgekehrten Richtung verlaufende Seilanordnung vorgesehen.

Die Wälzkörperkäfig-Synchronisierungsanordnung wird durch ein Seil 27 verwirklicht, welches mit einer Seite am mittleren Schienenelement 3 befestigt ist und in der Art eines Seilzuges um Umlenkrollen 28, welche über Mitnehmer mit den Wälzkörperkäfigen 16 und 16' in Verbindung stehen, und am äußeren Schienenelement 4 bzw. inneren Schienenelement 3 angeordnet sind, geführt ist. Hierdurch bewegen sich die Wälzkörperkäfige 16 und 16' halb so schnell wie das äußere Schienenelement 4 bzw. innere Schienenelement 3. Hier sind ebenfalls in beiden Richtungen entsprechende Seilzüge vorgesehen, um sowohl bei einer Einfahr- als auch einer Ausfahrbewegung eine Synchronisation sicher zu stellen. Die jeweiligen Umlenkrollen 29 sind jeweils im vorderen und hinteren Endbereich der Wälzkörperkäfige 16 und 16' angeordet.

Die Mitnehmer, an welchen die Umlenkrollen angeordnet sind, sind jeweils oben und unten zwischen dem äußere Schienenelement 4 bzw. innere Schienenelement 2 und dem mittleren Schienenelement 3 herausgeführt.

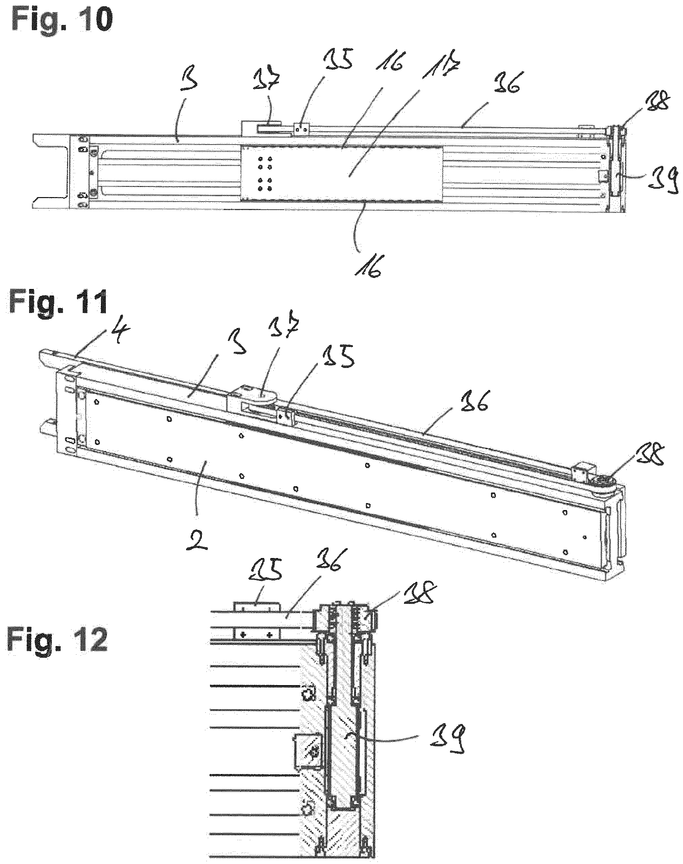

In Figuren 10 bis 12 ist weiteres Ausführungsbeispiels einer erfindungsgemäßen Teleskopschiene gezeigt, welche zwar dem Grundaufbau der in Fig. 1 bis 5 gezeigten Konstruktion entspricht, für die Umsetzung der Wälzkörperkäfig-Synchronisierungsanordnungen jedoch eine andere konstruktive Ausgestaltung wählt.

In diesem Ausführungsbeispiel wird die Wälzkörperkäfig-Synchronisierungsanordnung über eine Schienen-Synchronisierungsanordnung angetrieben, wie sie im Rahmen des ersten Ausführungsbeispiels gezeigt und beschrieben wurde, in Fig. 10 bis 12 der besseren Übersicht halber jedoch nicht noch einmal eingezeichnet wurde. Hierfür ist an der Welle 39 wie m Rahmen des ersten Ausführungsbeispiels gezeigt und beschrieben ein Ritzel angeordnet, welches mit Zahnstangen an dem inneren und äußeren Schienenelement kämmt. Die Welle 39 ist dabei in einem vorderen Endbereich des mittleren Schienenelementes gelagert.

Die Wälzkörperkäfig-Synchronisierungsanordnung erfolgt nun über Mitnehmer 35, welche mit den Wälzkörperkäfige 16, 16' in Verbindung stehen, und welche an einem umlaufenden Riemen 36 angreifen, welches durch ein auf der Welle 39 angeordnetes Antriebsrad angetrieben wird und auf der anderen Seite um ein ebenfalls am mittleren Schienenelement angeordneten Umlenkrad 37 umläuft. Dabei sind an dem Riemen 36 Mitnehmer 35 sowohl für die Wälzkörperkäfige 16, 16' zwischen dem mittleren Schienenelement und dem inneren Schienenelement als auch für die Wälzkörperkäfige 16, 16' zwischen dem mittleren Schienenelement und dem äußeren Schienenelement vorgesehen, so dass diese über den Riemen gekoppelt sind. Die Mitnehmer sind hier oben zwischen dem äußeren Schienenelement 4 bzw. inneren Schienenelement 2 und dem mittleren Schienenelement 3 herausgeführt. Der Riemenantrieb könnte auch auf der Unterseite angeordnet werden.

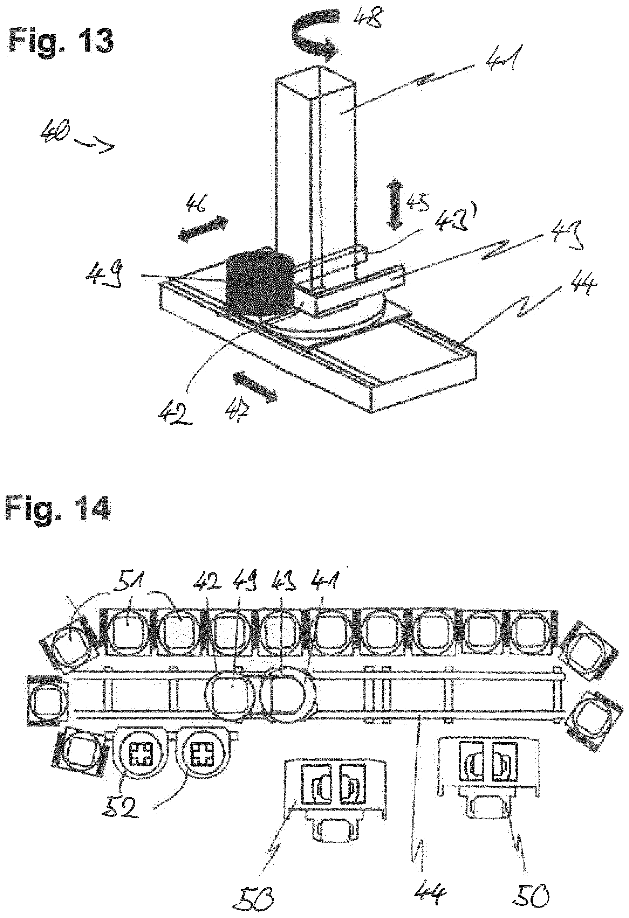

Fig. 13 zeigt ein Ausführungsbeispiel für ein Werkstück-Handling-Gerät 40 bzw. Werkstück-Handling-System, bei welchem erfindungsgemäße Teleskopschienen für eine horizontale Verfahrbewegung der Werkstücke sorgen.

Dabei ist ein Handling-Element 42 für Werkstücke 49, insbesondere ein Greifer, eine Gabel und/oder Ablageplatte, über mindestens zwei Teleskopschienen 43, 43' an einem Basiselement 41 angeordnet ist, wobei das Basiselement bevorzugt eine oder mehrere Bewegungsachsen aufweist. Im Ausführungsbeispiel ist ein Schlitten, an welchem die Teleskopschienen 43, 43' mit ihren inneren Schienenelementen montiert sind, vertikal in Richtung 45 an dem Basiselement 41 in Form eines Turms verfahrbar. Das Basiselement 41 ist weiterhin um eine vertikale Drehachse 48 drehbar und in horizontaler Richtung 46 und/oder 47 an einer Führung 44 verfahrbar. Fig. 14 zeigt ein Werkstück-Handling-System in Form eines Palettenspeichers mit einem Werkstück-Handling-Gerät 40, wie es in Fig. 13 gezeigt ist. Hier sind eine Mehrzahl von Speicherzellen 51, Rüstplätze 15, 16 und Werkzeugmaschienen 50 rings um das auf der Führung 44 verfahrbare Basiselement 41 angeordnet. Durch ein Ausfahren der Teleskopschienen können Werkstücke und/oder Paletten mit einem oder mehreren Werkstücken in die Speicherzellen 51, Rüstplätze 15, 16 und Werkzeugmaschienen 50 hinein verfahren bzw. aus diesen wieder entnommen werden.

Im Hinblick auf weitere Details und Varianten des Werkstück-Handling-Systems verweisen wir auf die DE 10 2016 009 000 A1.

## Patentansprüche

1. Teleskopschiene mit mindestens einem inneren, mittleren und äußeren Schienenelement, wobei das innere und das äußere Schienenelement jeweils über Wälzkörper, welche in einem Wälzkörperkäfig geführt sind, längsverschieblich an dem mittleren Schienenelement gelagert sind,
**dadurch gekennzeichnet,**
**dass** die Schienenelemente über eine Schienen-Synchronisierungsanordnung mechanisch so zwangsgekoppelt sind, dass bei einer Längsverschiebung des äußeren Schienenelementes gegenüber dem inneren Schienenelement das mittlere Schienenelement sowohl gegenüber dem inneren als auch dem äußeren Schienenelement längsverschoben wird,
und/oder dass mindestens einer und bevorzugt beide Wälzkörperkäfige jeweils über eine Wälzkörperkäfig-Synchronisierungsanordnung mechanisch so mit mindestens einem der Schienenelemente zwangsgekoppelt sind, dass eine Längsverschiebung des mittleren Schienenelementes gegenüber dem inneren oder äußeren Schienenelement zu einer Längsverschiebung des entsprechenden Wälzkörperkäfigs gegenüber dem mittleren Schienenelement führt.

2. Teleskopschiene nach Anspruch 1, wobei die Wälzkörperkäfig-Synchronisierungsanordnung so ausgelegt ist, dass die Längsverschiebung des Wälzkörperkäfigs gegenüber dem mittleren Schienenelement der halben Längsverschiebung des entsprechenden Schienenelementes gegenüber dem mittleren Schienenelement entspricht.

3. Teleskopschiene nach einem der vorangegangenen Ansprüche, wobei die Schienen-Synchronisierungsanordnung so ausgelegt ist, dass die Längsverschiebung des inneren Schienenelementes gegenüber dem mittleren Schienenelement der Längsverschiebung des mittleren Schienenelementes gegenüber dem äußeren Schienenelement entspricht.

4. Teleskopschiene nach einem der vorangegangenen Ansprüche, wobei die Schienen-Synchronisierungsanordnung ein Ritzel umfasst, welches am mittleren Schienenelement gelagert ist und mit Zahnstangen, welche am inneren und am äußeren Schienenelement vorgesehen sind, kämmt.

5. Teleskopschiene nach einem der vorangegangenen Ansprüche, wobei die Schienen-Synchronisierungsanordnung mindestens ein Zugelement, insbesondere ein Seil oder Band, umfasst, dessen Enden an dem inneren und dem äußeren Schienenelement befestigt sind und welches über ein am mittleren Schienenelement vorgesehenen Umlenkelement umgelenkt wird, wobei bevorzugt zwei Zugelemente vorgesehen sind, welche in entgegengesetzte Richtungen wirken.

6. Teleskopschiene nach einem der vorangegangenen Ansprüche, wobei mindestens eine und bevorzugt beide Wälzkörperkäfig-Synchronisierungsanordnungen ein Ritzel umfassen, welches an dem Wälzkörperkäfig gelagert ist und mit Zahnstangen kämmt, welche an den dem jeweiligen Wälzkörperkäfig zugeordneten Schienenelementen vorgesehen sind, wobei die Zahnstangen bevorzugt in das Material des jeweiligen Schienenelementes eingebracht sind, bspw. durch Fräsen, oder als separates Element mit dem jeweiligen Schienenelement verbunden sind.

7. Teleskopschiene nach einem der vorangegangenen Ansprüche, wobei das innere und/oder das äußere Schienenelement zwei parallele, bevorzugt in vertikaler Richtung übereinander angeordnete und/oder in entgegengesetzte Richtung ausgerichtete Führungsbahnen aufweist, welche entsprechenden Führungsbahnen des mittleren Schienenelements zugeordnet sind und auf welchen die Wälzkörper abwälzen, wobei die Wälzkörperkäfige für die den beiden Führungsbahnen zugeordneten Wälzkörper über einen Verbindungsbereich miteinander verbunden sind und bevorzugt einstückig ausgeführt sind, wobei sich der Verbindungsbereich bevorzugt zwischen einander zugewandten Seitenflächen des mittleren und des inneren bzw. äußeren Schienenelements erstreckt.

8. Teleskopschiene nach Anspruch 8, wobei die Wälzkörperkäfig-Synchronisierungsanordnung an dem Verbindungsbereich angeordnet ist und/oder angreift, wobei bevorzugt ein Ritzel der Wälzkörperkäfig-Synchronisierungsanordnung am Verbindungsbereich gelagert ist, und/oder das mittlere und/oder das innere bzw. äußere Schienenelement eine nutförmige Aussparung aufweist, in welcher eines oder mehrere Elemente der Wälzkörperkäfig-Synchronisierungsanordnung vorgesehen sind.

9. Teleskopschiene nach einem der vorangegangenen Ansprüche, wobei die Wälzkörperkäfig-Synchronisierungsanordnungen lediglich über die jeweiligen Schienenelemente mit der Schienen-Synchronisierungsanordnung zwangsgekoppelt sind.

10. Teleskopschiene nach einem der vorangegangenen Ansprüche, wobei die Wälzkörperkäfig-Synchronisierungsanordnungen über eine Kopplungsanordnung mit der Schienen-Synchronisierungsanordnung zwangsgekoppelt sind, wobei bevorzugt die Wälzkörperkäfige über mindestens ein Zugelement, insbesondere einen Riemen, von der Schienen-Synchronisierungsanordnung angetrieben werden, wobei das Zugelement bevorzugt die Wälzkörperkäfige miteinander koppelt und/oder um ein Antriebselement umläuft, welches von einem Ritzel der Schienen-Synchronisierungsanordnung angetrieben wird und/oder am mittleren Schienenelement gelagert ist.

11. Teleskopschiene nach einem der vorangegangenen Ansprüche, wobei die Wälzkörperkäfig-Synchronisierungsanordnung mindestens ein Zugelement, insbesondere ein Seil oder Band, umfasst, über welches der Wälzkörperkäfig mit dem mittleren und dem inneren oder äußeren Schienenelement in Verbindung steht, wobei das Zugelement bevorzugt in Form eines Flaschenzuges um ein Umlenkelement geführt ist, welches mit dem Wälzkörperkäfig in Verbindung steht und/oder wobei für Bewegungen in beide Richtungen separate Zugelemente vorgesehen sind.

12. Teleskopschiene nach einem der vorangegangenen Ansprüche, mit einem Antrieb, welcher an dem inneren oder äußeren Schienenelement angreift, um die Schienenelemente gegeneinander zu verschieben, wobei der Antrieb bevorzugt über einen umlaufenden Riemen erfolgt, welcher über einen Mitnehmer mit dem inneren oder äußeren Schienenelement gekoppelt ist.

13. Teleskopschiene nach einem der vorangegangenen Ansprüche, wobei das äußere Schienenelement um maximal seine eigene Länge gegenüber dem inneren Schienenelement längsverschieblich ist und/oder wobei das mittlere Schienenelement das innere und/oder äußere Schienenelement auf der Unter- und Oberseite umgreift, wobei das innere und/oder äußere Schienenelement bevorzugt auf der Unter- und der Oberseite Führungsbahnen aufweist, auf welcher die Wälzkörper abwälzen.

14. Werkstück-Handling-System mit mindestens einer Teleskopschiene nach einem der vorangegangenen Ansprüche, wobei bevorzugt ein Handling-Element für Werkstücke, insbesondere ein Greifer, eine Gabel und/oder Ablageplatte, über mindestens zwei Teleskopschienen an einem Basiselement angeordnet ist, wobei das Basiselement bevorzugt eine oder mehrere Bewegungsachsen aufweist.

15. Werkstück-Handling-System nach Anspruch 14, wobei es sich um ein Regalbediengerät für ein Palettenspeichersystem handelt, wobei das Handling-Element bevorzugt zum Einbringen und/oder Entnehmen von Werkstücken und/oder Paletten in Speicherfächer dient.
